# EUROPÄISCHE PATENTSCHRIFT

(11) **EP 1 881 390 B1**
(45) Veröffentlichungstag und Bekanntmachung des Hinweises auf die Patenterteilung: **05.04.2017**
(21) Anmeldenummer: 07012969.7
(22) Anmeldetag: 03.07.2007
(51) Int. Cl.: G05D 23/13

(54) **Thermostat-Mischventil zum Mischen von Kalt-und Warmwasser**
Thermostat mixing valve for mixing cold and warm water
Mitigeur thermostatique destiné au mélange d'eau froide et chaude

(30) Priorität: 10.07.2006 DE 102006032018
(43) Veröffentlichungstag der Anmeldung: 23.01.2008
(73) Patentinhaber: Grohe AG, 58675 Hemer (DE)
(72) Erfinder: Frankholz, Christian, 58730 Fröndenberg (DE); Huck, Kai, 58300 Wetter (DE); Riedel, Björn, 44795 Bochum (DE)

(56) Entgegenhaltungen:
- EP-A- 0 767 332
- DE-A1- 4 324 547
- FR-A- 2 706 194
- US-A1- 2002 011 523

## Beschreibung

Die Erfindung betrifft ein Thermostat-Mischventil zum Mischen von Kalt- und Warmwasser.

Thermostatgeregelte Mischventile insbesondere zum Bereitstellen von temperiertem Wasser für Duschen, Badewannen, Waschbecken oder dergleichen sind grundsätzlich bekannt. Beispiele hierfür finden sich in DE 41 16 954 A1, EP 0 242 680 B1 und DE 102 28 212 A1. Bekannte Thermostat-Mischventile weisen ein Gehäuse auf (zumeist rotationssymmetrisch), das einen Kaltwasser-Einlass und einen Warmwasser-Einlass sowie einen Mischwasser-Auslass aufweist. Die Kaltwasser- und Warmwasser-Einlässe sind im Regelfall in Form mehrerer in Umfangsrichtung verlaufender schlitzförmiger Öffnungen in der Wandung des Gehäuses ausgebildet, während der Mischwasser-Auslass zentral am unteren Ende des Gehäuses angeordnet ist. Die Einlassöffnungen für Kalt- und Warmwasser werden im Zusammenspiel mit einem Ventilkörper umgekehrt proportional zueinander mehr oder weniger weit geöffnet bzw. geschlossen, um Mischwasser der gewünschten, voreingestellten Temperatur abzugeben. Hierzu weist das Mischventil einen Thermostaten auf, der mit dem Ventilkörper gekoppelt ist. Der Ventilkörper ist über eine (Rückhol-)Feder in eine durch die voreingestellte Temperatur definierte Stellung vorgespannt. Der Thermostat weist einen Stößel auf, der in Abhängigkeit von der Temperatur der an einem Fühler entlangstreichenden Mischwasserströmung aus dem Thermostaten heraus bewegbar ist und den Ventilkörper dabei in Richtung gegen die Vorspannung der Rückholfeder bewegt.

Bei der Gebäudeinstallation der Versorgungsleitungen für Thermostat-Mischventile bzw. Sanitär-Mischbatterien mit Thermostat-Mischventilen kann es vorkommen, dass die Anschlüsse für das Kaltwasser, die vorschriftsmäßig rechts liegen, und die Anschlüsse für das Warmwasser, die vorschriftsmäßig links liegen, vertauscht werden. Ein Thermostat-Mischventil mit vertauschten Warm- und Kaltwasseranschlüssen funktioniert jedoch nicht mehr vorschriftsmäßig. Man müsste also die Kalt- und Warmwasserleitungen neu verlegen, was je nach dem Baufortschritt relativ kostenintensiv ist. Darüber hinaus ist es vielfach üblich, Sanitärräume in Gebäuden spiegelbildlich zueinander anzuordnen, so dass von einer Hauptleitung beide Räume versorgt werden können. Hierbei ist es dann erforderlich, durch besondere Ausgleichsrohrleitungen usw. die Anschlüsse wiederum vorschriftsmäßig an jede der beiden spiegelbildlich angeordneten Thermostat-Mischbatterien auszubilden.

Aus DE 198 13 296 A1 ist es bereits bekannt, bei einer Mischbatterie Maßnahmen vorzusehen, die das Zusammenspiel zwischen dem Ventilkörper und den Einlässe für das Kalt- und das Warmwasser verändern, wenn die Anschlüsse für das Warm- und Kaltwasser vertauscht sind.

Schließlich ist noch aus der DE 43 24 547 Aleine sanitäre Mischbatterie mit einer Thermostatsteuerung bekannt. Die daraus bekannte Armatur zeichnet sich durch wenigstens eine zwischen einem Temperatursteuer- und Regelblock und einem Steuer- und Regelkolben vorgesehene ringförmige Membrandichtung aus, die entweder zwischen einem Kaltwasserringraum und einem Warmwasserringraum oder den Kaltwasserringraum und/oder den Warmwasserringraum nach außen hin abdichtet.

Aufgabe der Erfindung ist es, ein Thermostat-Mischventil zu schaffen, dass sich auf einfache Art und Weise für den Fall umrüsten lässt, dass die Anschlüsse für das Warm- und Kaltwasser vertauscht sind.

Zur Lösung dieser Aufgabe wird mit der Erfindung ein Thermostat-Mischventil zum Mischen von Kalt- und Warmwasser vorgeschlagen, dass versehen ist mit einem Gehäuse , das einen Kaltwasser-Einlass und einen Warmwasser-Einlass sowie einen Mischwasser-Auslass aufweist, und einem dem Mischwasser aussetzbaren Thermostaten, der mit einem Ventilkörper gekoppelt ist, welcher in Abhängigkeit von den Temperaturen des Kalt- und Warmwassers zum Erreichen und/oder Aufrechterhalten einer vorgebbaren Mischwassertemperatur derartig längs eines Stellweges verschiebbar zwischen den Kaltwasser- und Warmwasser-Einlässen angeordnet ist, dass der eine Einlass um das Maß verkleinerbar ist, um das der andere Einlass vergrößerbar ist.

Dieses Thermostat-Mischventil ist erfindungsgemäß dadurch gekennzeichnet,
- dass zwischen dem Kaltwasser-Einlass und dem Warmwasser-Einlass ein Ventilsitzring angeordnet ist, an dem beidseitig von den Einlässen Kalt- und Warmwasser entlangströmbar ist,
- dass der Ventilkörper eine Hülse aufweist, die eine Umfangsvertiefung aufweist, die sich zwischen zwei gegenüber liegenden radialen Flanken erstreckt, deren Abstand voneinander im wesentlichen um den Stellweg größer als die axiale Erstreckung des Ventilsitzringes ist, und
- dass die Hülse innerhalb ihrer Umfangsvertiefung Durchbrechungen zum Einströmen von Kalt- und Warmwasser in die Hülse zur Bildung von an dem Thermostaten entlangströmbarem Mischwasser aufweist.

Ausgangspunkt der Erfindung ist ein Thermostat-Mischventil mit Ventilkörper, der längs eines Stellweges zwischen einem am Kaltwasser-Einlass ausgebildeten Ventilsitz und einem am Warmwasser-Einlass ausgebildeten Ventilsitz axial verschiebbar ist. Der Ventilkörper weist Überströmbohrungen auf, über die beispielsweise in einer mittleren Stellung des Ventilkörpers ober- bzw. unterhalb dieses einströmendes Kalt- und Warmwasser zueinander gelangt. Bei vorschriftsmäßigem Anschluss strömt das Kaltwasser auf der dem Mischwasser-Auslass abgewandten Seite des Ventilkörpers ein, durchströmt die Überströmbohrungen des Ventilkörpers und trifft anschließend auf unterhalb des Ventilkörpers einströmendes Warmwasser, vermischt sich mit diesem, um dann als Mischwasser, am Fühler des Thermostaten vorbeiströmend, aus dem Mischwasser-Auslass auszutreten.

Von diesem Prinzip des sich zwischen den beiden gegenüberliegenden Ventilsitzen der Kaltwasser- und Warmwasser-Einlässe axial bewegbaren Ventilkörpers wird nach Umrüstung des Mischventils zur Herstellung eines erfindungsgemäßen Thermostat-Mischventils dahingehend abgewichen, als nunmehr zwischen die beiden Ventilsitze an den Kaltwasser- und den Warmwasser-Einlässen ein feststehender Ventilsitzring angeordnet ist, an dem beidseitig von den Einlässen für Kalt- und Warmwasser kommendes Wasser entlangströmt. Der Ventilkörper des erfindungsgemäßen Thermostat-Mischventils ist mit einer Hülse versehen, die mit dem Ventilsitzring und insbesondere mit zwei einander gegenüberliegenden bzw. voneinander abgewandten Stirnseiten des Ventilsitzrings zusammenwirkt. Hierzu weist der hülsenförmige Ventilkörper eine Umfangsvertiefung auf, die durch zwei gegenüberliegende radiale Flanken in ihrer Axialerstreckung begrenzt ist. Diese Axialerstreckung ist im wesentlichen um den Stellweg des Ventilkörpers größer als die axiale Erstreckung (Dicke) des Ventilsitzrings. Die beiden einander gegenüberliegenden Flanken der Umfangsvertiefung der Hülse des Ventilkörpers wirken nun mit dem festsitzenden Ventilsitzring zusammen, um die Zuläufe von Warm- und Kaltwasser zu regulieren. Das zwischen dem Ventilsitzring und den diesem gegenüberliegenden Flanken der Umfangsvertiefung einströmende Kalt- und Warmwasser gelangt über Durchbrechungen in der Wandung der Hülse im Bereich ihrer Umfangsvertiefung zusammen und strömt als Mischwasser in bekannter Weise über den Mischwasser-Auslass heraus, wobei es zuvor an dem Temperaturfühler des Thermostaten entlangströmt.

Sinngemäß besteht die Erfindung also darin, den Ventilkörper nicht mehr zwischen zwei einander gegenüberliegenden Ventilsitzen für das Kalt- und Warmwasser zu bewegen, sondern mit Hilfe des Ventilkörpers einen zwischen diesen beiden Ventilsitzen fest angeordneten Ventilsitzring zu umgreifen, dessen einander abgewandte Stirnseiten die Ventilsitze für das Kalt- und das Warmwasser bilden, gegen die sich die Flanken der Umfangsvertiefung bewegen.

Weitere vorteilhafte Ausgestaltungen der Erfindung sind Gegenstand der Unteransprüche. Danach ist beispielsweise mit Vorteil vorgesehen, dass der Thermostat zumindest teilweise innerhalb der Hülse angeordnet ist und/oder dass die Hülse innerhalb ihrer Umfangsvertiefungen Stege aufweist. Die Anordnung des Thermostaten bzw. des Temperaturfühlers in der Hülse hat den Vorteil einer engen Umströmung des Thermostaten durch das Mischwasser, womit dessen Temperatur effektiv erfasst werden kann. Die Ausbildung von Stegen innerhalb der Umfangsvertiefung hat den Vorteil, dass sich damit zwischen benachbarten Stegen automatisch großflächigen Durchbrechungen zum Umströmen des in die Hülse hineinragenden Teils des Ventilsitzrings mittels Kalt- und Warmwasser bilden.

Zur Aufrechterhaltung des Kalt- und Warmwasserflusses durch die entsprechenden Einlässe des Gehäuses, wenn zwischen diesen der Ventilsitzring angeordnet ist, ist es zweckmäßig an dem Ventilsitz sich in axiale Richtung zu beiden Seiten erstreckende Abstandshalter vorzusehen, die sich gegen die an den Kalt- und Warmwasser-Einlässen ausgebildeten Ventilsitze des Gehäuses abstützen.

In montagetechnischer Hinsicht vorteilhaft ist es, wenn die den Ventilsitzring umgebende Hülse zweiteilig aufgebaut ist, wobei die beiden Hülsenteile zweckmäßigerweise miteinander verschraubbar sind.

Bei dem erfindungsgemäßen Thermostat-Mischventil erfolgt die Abdichtung des Ventilkörpers beidseitig der Gruppe von Einlässe für sowohl das Kalt- als auch das Warmwasser. Demgegenüber ist bei einem Thermostat-Mischventil zum Anschluss an vorschriftsmäßig verlegte Warm- und Kaltwasserrohrleitungen der Ventilkörper selbst (im Bereich zwischen den Einlässen für das Kalt- und das Warmwasser) abgedichtet.

Die Erfindung wird nachfolgend anhand eines Ausführungsbeispiels unter Bezugnahme auf die Zeichnungen näher erläutert. Im einzelnen zeigen dabei:
- Fig. 1: einen Schnitt durch ein Thermostat-Mischventil mit Ventilkörperausbildung bei vorschriftsmäßiger Zuführung von Warm- und Kaltwasser,
- Fig. 2: eine Schnittansicht des erfindungsgemäßen Thermostat-Mischventils mit dem Gehäuseaufbau, wie bei dem herkömmlichen Thermostat-Mischventil nach Fig. 1 gezeigt, jedoch mit verändertem Ventilkörper, der sich allerdings wie der Ventilkörper des Mischventils nach Fig. 1 in das Gehäuse einbauen lässt und für die vorschriftsmäßige Funktionsweise des Mischventils bei gegenüber der Situation nach Fig. 1 vertauschter Warm- und Kaltwasserzufuhr sorgt, und
- Fig. 3: eine perspektivische Darstellung (in Explosionsansicht) des Ventilkörpers des Mischventils nach Fig. 2 mit Thermostat.

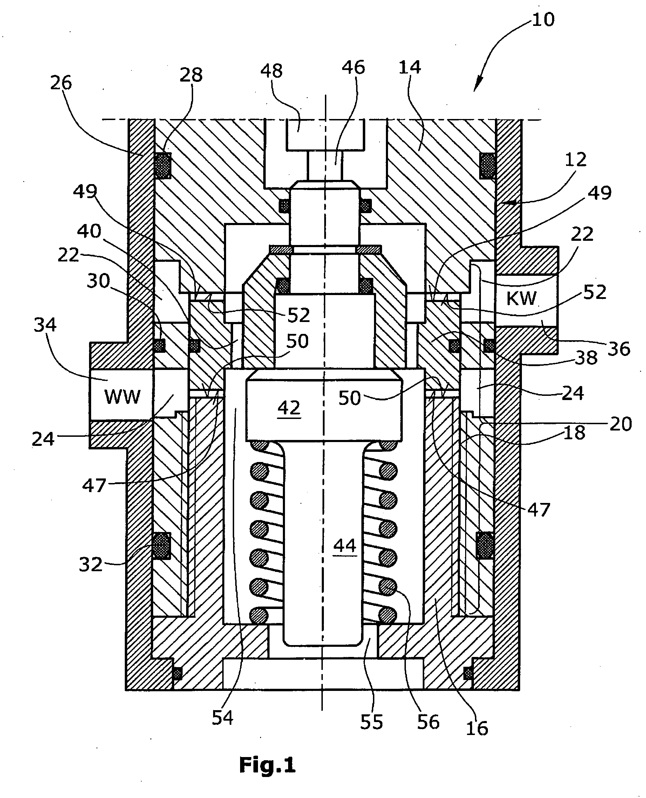

Fig. 1 zeigt ein Beispiel für ein thermostatgeregeltes Mischventil 10, von dem der hier entscheidende Teil im Längsschnitt dargestellt ist.

Das Thermostatventil 10 weist ein beispielsweise aus Kunststoff bestehendes im wesentlichen rotationssymmetrisches Gehäuse 12 auf, das ein erstes Gehäuseteil 14 und ein zweites Gehäuseteil 16 umfasst. Diese beiden Gehäuseteile sind miteinander verschraubt, was bei 18 angedeutet ist. Das erste Gehäuseteil 14 weist einen hülsenförmigen Ansatz 20 auf, in den das zweite Gehäuseteil 16 eingeschraubt ist. In dem hülsenförmigen Ansatz 20 ist das erste Gehäuseteil 14 mit zwei Gruppen von über den Umfang nebeneinander angeordneten Einlassöffnungen 22, 24 versehen. Die erste Gruppe von Einlassöffnungen 22 dient dabei der Kaltwasserzufuhr, während die zweite Gruppe von Einlassöffnungen 24 der Warmwasserzufuhr dient. Das Gehäuse 12 des Mischventils 10 befindet sich in einem Armaturgehäuse, das in Fig. 1 mit 26 bezeichnet ist und gegenüber dem das Gehäuse 12 durch Dichtungsringe 28, 30, 32 abgedichtet ist. Das Armaturgehäuse 26 weist einen Zulauf 34 für Warmwasser und einen Zulauf 36 für Kaltwasser auf, die in Fluidverbindung mit den Warmwasser-Einlässen 24 bzw. den Kaltwasser-Einlässen 22 des Gehäuses 12 stehen.

Innerhalb des Gehäuses 12 befindet sich ein Ventilkörper 38, der in diesem Ausführungsbeispiel als Scheibe ausgebildet ist und von einer Vielzahl von axialen Überströmkanälen 40 durchzogen ist. Im Innern des Ventilkörpers 38 befindet sich ein Thermostat 42, der ein Temperaturfühlerelement 44 und einen axial ausfahrbaren Stößel 46 aufweist, welcher an einem Gegenlager 48 anliegt. Durch axiales Verschieben des Gegenlagers 48 über einen (nicht dargestellten) Temperatureinstellgriff lässt sich die Position des Ventilkörpers 38 innerhalb des Gehäuses 12 in bekannter Art und Weise voreinstellen. Der Thermostat 42 sorgt dann dafür, dass die der Axialposition des Ventilkörpers 38 entsprechende Temperatur des Mischwassers eingehalten bleibt.

Bei thermostatgesteuerten Mischventilen arbeitet der Ventilkörper 38 (über einander abgewandte Flächen 47, 49) mit zwei Ventilsitzen zusammen, zwischen denen sich der Ventilkörper 38 bewegen kann. Bei dem einen Ventilsitz handelt es sich um den Warmwasserventilsitz 50, während der zweite Ventilsitz der Kaltwasserventilsitz 52 ist. Je nach der Axialposition des Ventilkörpers 38 zwischen den beiden Sitzen 50, 52 ist die Menge an zugeführtem Warm-bzw. Kaltwasser entsprechend eingestellt. In der Darstellung gemäß Fig. 1 ist der Fall eingezeichnet, in dem der Ventilkörper 38 eine Mittelstellung zwischen den beiden gegenüberliegenden Ventilsitzen 50, 52 einnimmt.

Die Funktionsweise des thermostatgeregelten Mischventils 10 gemäß Fig. 1 ist wie folgt. Über den Zulauf 34 gelangt Kaltwasser durch die Kaltwasser-Einlassöffnungen 22 oberhalb des Ventilkörpers 38 in das Gehäuse 12 hinein, wo es über die Überströmkanäle 40 nach unten in den Raum 54 des Gehäuses 12 einströmt. Über den Warmwasserzulauf 36 gelangt warmes Wasser unten an dem Ventilkörper 38 vorbei in den Raum 54 um den Thermostaten 42 und das Temperaturfühlerelement 44 hinein, in den über die Überströmkanäle 40 das Kaltwasser einströmt. Beides (Kalt- und Warmwasser) vermischt sich in der Mischkammer (Raum 54) und strömt über den Mischwasser-Auslass 55 des Gehäuses ab. Die Mischwassertemperatur wird über das Temperaturfühlerelement 44 erfasst.

Sollte nun beispielsweise die (Vorlauf-)Temperatur des Warmwassers ansteigen, so erhöht sich die Mischwassertemperatur, was durch das Temperaturfühlerelement 44 erfasst wird. als Folge der erhöhten Temperatur dehnt sich ein temperatursensitives Material in dem Thermostaten 42 aus, so dass sich der Stößel 46 aus dem Thermostaten 42 nach oben gegen das Gegenlager 48 herausbewegt. Da dieses Gegenlager 48 bei normalem Betrieb des Mischventils 10 wie ein feststehendes Lager wirkt, bewegt sich der Thermostat samt Ventilkörper 38 in der Zeichnungsebene gemäß Fig. 1 nach unten und damit gegen den Warmwasserventilsitz 50. Damit reduziert sich die Warmwassermenge (bei gleichzeitiger Vergrößerung der Kaltwassermenge), so dass die Mischwassertemperatur im wesentlichen gleich bleibt.

Umgekehrt würde, wenn die Temperatur des Warmwassers abnimmt, sich der Stößel 46 in den Thermostaten 42 hineinbewegen. Da, wie in Fig. 1 zu erkennen, der Thermostat 42 über eine Rückholfeder 56 gegen das erste Gehäuseteil 14 vorgespannt ist, bewegt sich also der Thermostat 42 samt Ventilkörper 38 in Richtung auf den Kaltwasserventilsitz 52, wodurch die Menge an Kaltwasser reduziert und die Menge an Warmwasser erhöht wird, was zur Folge hat, dass die Mischwassertemperatur auf dem eingestellten Wert gleich bleibt.

Es versteht sich von selbst, dass ein thermostatgesteuertes Mischventil, wie es in Fig. 1 gezeigt ist, nicht mehr funktioniert, wenn die Anschlüsse für das Warmwasser und das Kaltwasser vertauscht werden. Denn in diesem Fall würde das Gesamtsystem nicht mehr rückgekoppelt sondern mitgekoppelt sein. Wärmer werdendes Warmwasser, das bei falschem Anschluss über den eigentlich für das Kaltwasser vorgesehenen Zulauf 36 einströmt, würde dazu führen, dass sich in Folge der Herausbewegung des Stößels 46 und der bezogen auf die Zeichnung gemäß Fig. 1 Abwärtsbewegung des Ventilkörpers die Einströmmenge an wärmer werdendem Warmwasser erhöht und die Menge an Kaltwasser reduziert.

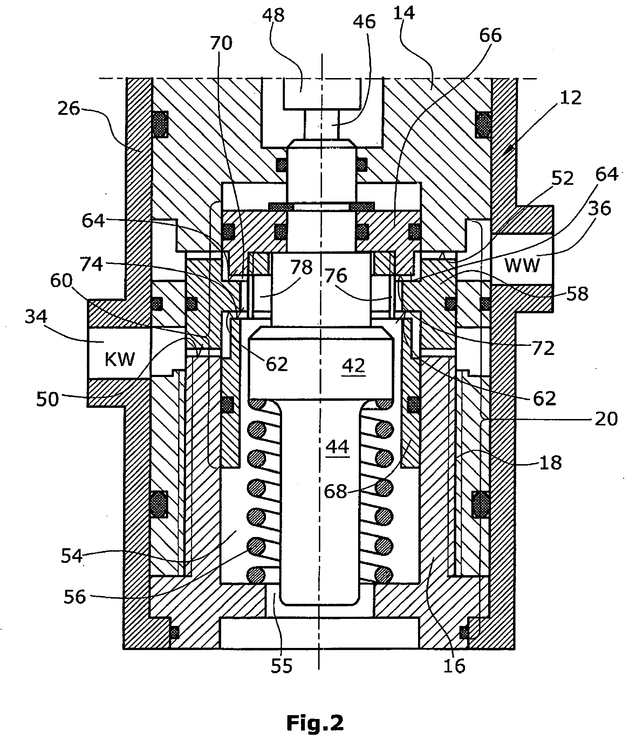

Daher bieten die Hersteller von thermostatgesteuerten Mischventilen sogenannte Adapter an, mit denen sich ein Mischventil an die vertauschten Warm- und Kaltwasserzuläufe adaptieren lässt. Die erfindungsgemäße Lösung für eine derartige Adaption, und zwar für im wesentlichen alle im Handel befindlichen thermostatgesteuerten Mischventile (egal ob Axial- oder Radialanströmung des Thermostaten durch das Mischwasser) ist in Fig. 2 gezeigt. Hierbei ist der Ventilkörper zweiteilig ausgebildet und weist einen festsitzenden Ventilsitzring 58 und eine dazu axial bewegbare Hülse 60 auf. Der Ventilsitzring 58 ist zwischen den sich gegenüberliegenden Warmwasser- und Kaltwasserventilsitzen 50, 52 des Gehäuses 12 fest angeordnet und gegenüber beiden beabstandet, so dass Warm- bzw. Kaltwasser stets an den entsprechenden Ventilsitzen 50, 52 ins Innere des Gehäuses 12 einströmen kann. Der Ventilsitzring 58 weist einen Kaltwasserventilsitz 62 und einen Warmwasserventilsitz 64 auf, die, wie in diesem Ausführungsbeispiel, nach innen versetzt zu den Warm- und Kaltwasserventilsitzen 50, 52 des Gehäuses 12 angeordnet sein können und den gehäuseseitigen Ventilsitzen 50,52 gegenüberliegen können. Die beiden Ventilsitze 62, 64 des Ventilsitzrings 58 liegen an gegenüberliegenden (Stirn-)Seiten, weisen also voneinander weg, während die gehäuseseitigen Ventilsitze 50, 52 für Warm- und Kaltwasser einander gegenüberliegen (unter Zwischenschaltung des Ventilsitzrings 58 bzw. bei vorschriftsmäßigem Warm- und Kaltwasseranschluss unter Zwischenschaltung des Ventilkörpers 38).

Die Hülse 60 des Ventilkörpers ist axial verschiebbar relativ zum Ventilsitzring 58. Die Hülse 60 ist nach Fig. 2 zweiteilig aufgebaut und weist einen oberen Hülsenteil 66 und einen unteren Hülsenteil 68 auf. Beide Hülsenteile sind miteinander verschraubbar, wobei sich im verschraubten Zustand zwischen beiden eine Umfangsvertiefung 70 ergibt, in der der Ventilsitzring 58 aufgenommen ist. Die Umfangsvertiefung 70 ist durch radiale Flanken 72, 74 begrenzt, die mit den Ventilsitzen 62, 64 des Ventilsitzrings 58 zusammenwirken, um die Menge an Warm- und Kaltwasser zu regulieren.

Der obere Hülsenteil 66 ist fest mit dem Thermostaten 42 verbunden. Im Bereich der Umfangsvertiefung 70 weist der untere Hülsenteil 68 axiale Stege 76 auf, zwischen denen sich Durchbrechungen 78 in der Hülse 60 bilden, über die Kalt- und Warmwasser, das in den beidseitig des Ventilsitzrings 58 angeordneten Zwischenräumen zwischen Ventilsitz 62 und der Flanke 74 einerseits und zwischen dem Ventilsitz 64 und der Flanke 72 andererseits einströmt, ins Innere der Hülse 60 gelangt, wo die Vermischung erfolgt.

Bei Adaption des Mischventils gemäß Fig. 1 durch den Einsatz des zweiteiligen Ventilkörpers gemäß Fig. 2 wird die Bewegung des Ventilkörpers 38 nach Fig. 1 zwischen den zwei sich gegenüberliegenden Ventilsitzen 50, 52 für Warm- und Kaltwasser in die Bewegung der Hülse 60 um die zwei voneinander abgewandten Ventilsitze 62, 64 des Ventilsitzrings 58 gemäß Fig. 2 umgesetzt. Damit kehren sich die Verhältnisse im Vergleich zum vorschriftsmäßig angeschlossenen Mischventil gemäß Fig. 1 um. Im Falle eines Fehlanschlusses des Mischventils 10 strömt also über den Zulauf 36 Warmwasser ein. In der in Fig. 2 gezeigten Situation ist die Hülse 60 und der Thermostat 42 über den (nicht dargestellten) Temperatureinstellknopf auf eine mittlere Position eingestellt, so dass sowohl Warm- als auch Kaltwasser zufließt. Das Warmwasser gelangt an dem Kaltwasserventilsitz 52 des Gehäuses 12 entlang zur Hülse 60, wo es zwischen der Flanke 72 der Hülse 60 und dem Ventilsitzring-Ventilsitz 64 entlang und weiter zwischen den Stegen 76 ins Innere der Hülse 60 strömt. Das (fälschlicherweise) über den Zulauf 34 zugeführte Kaltwasser strömt an dem Ventilsitz 50 des Gehäuses 12 entlang und ferner zwischen dem Ventilsitz 62 und der Flanke 74 der Hülse 60 bis in deren Inneres hinein. Sollte nun die (Verlauf-)Temperatur des Warmwassers ansteigen, so wird der Stößel 46 aus dem Thermostaten 42 herausgedrückt, was wegen des festen Gegenlagers 48 zu einer Abwärtsbewegung der Hülse 60 nebst Thermostats 42 führt. Hierbei bewegt sich die Flanke 72 der Hülse 60 in Richtung auf den Ventilsitz 64 des Ventilsitzrings 58 zu, wodurch die Menge an Warmwasser verringert (und die Menge an Kaltwasser erhöht wird), so dass die Mischwassertemperatur trotz steigender (Vorlauf-)Temperatur des Warmwassers gleich bleibt.

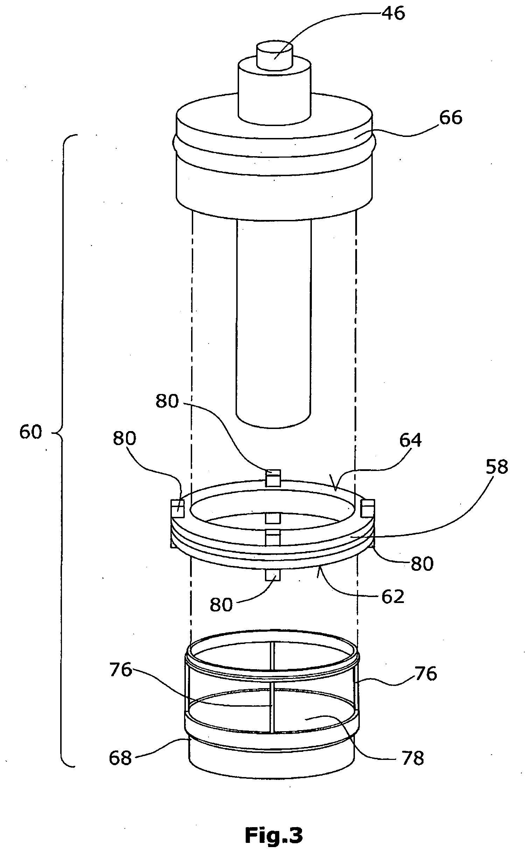

Anhand von Fig. 3 wird nochmals der Aufbau des zweiteiligen Ventilkörpers für die Umrüstung des Mischventils 10 gemäß Fig. 2 deutlich. Der Ventilkörper umfasst einerseits die Hülse 60, die ihrerseits aus den zwei Hülsenteilen 66 und 68 besteht, und den in der Umfangsvertiefung 70 aufgenommenen Ventilsitzring 58. Der Ventilsitzring 58 weist von seinen Ventilsitzen 62, 64 abstehende Abstandshaltevorsprünge 80 auf, mit denen er an den gehäuseseitigen Warmwasser- und Kaltwasserventilsitzen 50, 52 anliegt.

## Patentansprüche

1. Thermostat-Mischventil zum Mischen von Kalt- und Warmwasser mit
- einem Gehäuse (12), das einen Kaltwasser-Einlass (22) und einen Warmwasser-Einlass (24) sowie einen Mischwasser-Auslass (55) aufweist, und
- einem dem Mischwasser aussetzbaren Thermostaten (42), der mit einem Ventilkörper (38) gekoppelt ist, welcher in Abhängigkeit von den Temperaturen des Kalt- und Warmwassers zum Erreichen und/oder Aufrechterhalten einer vorgebbaren Mischwassertemperatur derartig längs eines Stellweges verschiebbar zwischen den Kaltwasser- und Warmwasser-Einlässen (22, 24) angeordnet ist, dass der eine Einlass um das Maß verkleinerbar ist, um das der andere Einlass vergrößerbar ist,
**dadurch gekennzeichnet,**
- **dass** der Ventilkörper (58, 60) zweiteilig ausgebildet ist und einen festsitzenden Ventilring (58) und eine dazu axial bewegbare Hülse (60) aufweist,
- wobei an dem Ventilsitzring (58) beidseitig von den Einlässen (22, 24) Kalt- und Warmwasser entlangströmbar ist und
- die Hülse (60) eine Umfangsvertiefung (70) aufweist, die sich zwischen zwei gegenüberliegenden radialen Flanken (72, 74) erstreckt, deren Abstand voneinander im Wesentlichen um den Stellweg größer ist als die axiale Erstreckung des Ventilsitzringes (58), und
- **dass** die Hülse (60) innerhalb ihrer Umfangsvertiefung (70) Durchbrechungen (78) zum Einströmen von Kalt- und Warmwasser in die Hülse (60) zur Bildung von an dem Thermostaten (42) entlangströmbaren Mischwasser aufweist.

2. Thermostat-Mischventil nach Anspruch 1, **dadurch gekennzeichnet, dass** der Thermostat (42) zumindest teilweise innerhalb der Hülse (60) angeordnet ist.

3. Thermostat-Mischventil nach Anspruch 1 oder 2, **dadurch gekennzeichnet, dass** die Hülse (60) innerhalb ihrer Umfangsvertiefung (70) Stege (76) aufweist.

4. Thermostat-Mischventil nach einem der Ansprüche 1 bis 3, **dadurch gekennzeichnet, dass** der Ventilsitzring (58) sich in axialer Richtung zu beiden Seiten erstreckende Abstandshaltervorsprünge (80) aufweist, die sich gegen die an den Warmwasser- und Kaltwasser-Einlässen (22, 24) ausgebildeten Ventilsitze (50, 52) des Gehäuses (12) abstützen.

5. Thermostat-Mischventil nach einem der Ansprüche 1 bis 4, **dadurch gekennzeichnet, dass** der Ventilsitzring (58) einen Kaltwasserventilsitz (62) und einen Warmwasserventilsitz (64) aufweist, die insbesondere nach innen versetzt zu den Warm- und Kaltwasserventilsitzen (50, 52) des Gehäuses (12) angeordnet sind und insbesondere diesen gegenüberliegen.

## Claims

1. Thermostatic mixer valve for mixing cold and hot water, having
- a housing (12), which has a cold-water inlet (22) and a hot-water inlet (24) and also a mixed-water outlet (55), and
- a thermostat (42) which can be exposed to the mixed water and is coupled to a valve body (38) which, to reach and/or maintain a specifiable mixed-water temperature, is arranged so as to be displaceable, in dependence upon the temperatures of the cold and hot water, along an adjustment path between the cold-water and hot-water inlets (22, 24) in such a way that the one inlet can be made smaller to the extent that the other inlet can be made larger,
**characterised in that**
- the valve body (58, 60) is of two-part construction and has a fixed valve ring (58) and a sleeve (60) axially movable relative thereto,
- wherein cold and hot water is able to flow from the inlets (22, 24) along the valve seat ring (58) on both sides and
- the sleeve (60) has a circumferential recess (70) which extends between two oppositely located radial flanks (72, 74) the spacing of which from one another is greater substantially by the adjustment path than the axial extent of the valve seat ring (58), and
- the sleeve (60) has, inside its circumferential recess (70), openings (78) for inflow of cold and hot water into the sleeve (60) to form mixed water that is able to flow along the thermostat (42).

2. Thermostatic mixer valve according to claim 1, **characterised in that** the thermostat (42) is arranged at least partly inside the sleeve (60).

3. Thermostatic mixer valve according to claim 1 or 2, **characterised in that** the sleeve (60) has ribs (76) inside its circumferential recess (70).

4. Thermostatic mixer valve according to any one of claims 1 to 3, **characterised in that** the valve seat ring (58) has spacer projections (80) extending in the axial direction on both sides, which spacer projections are supported against the valve seats (50, 52) of the housing (12) that are formed at the hot-water and cold-water inlets (22, 24).

5. Thermostatic mixer valve according to any one of claims 1 to 4, **characterised in that** the valve seat ring (58) has a cold-water valve seat (62) and a hot-water valve seat (64), which valve seats are especially arranged displaced inwards relative to the hot-water and cold-water valve seats (50, 52) and are especially located opposite thereto.

## Revendications

1. Mitigeur thermostaté permettant de mélanger de l'eau froide et de l'eau chaude et comprenant :
- un boîtier (12) comprenant une entrée d'eau froide (22) et une entrée d'eau chaude (24) ainsi qu'une sortie d'eau mélangée (55), et
- un thermostat (42) pouvant être exposé à l'eau mélangée et qui est couplé à un corps de soupape (38) qui est monté coulissant entre les entrées d'eau froide et d'eau chaude (22, 24) le long d'une course de réglage en fonction des températures de l'eau froide et de l'eau chaude pour permettre d'obtenir et/ou de maintenir une température de l'eau mélangée pouvant être prédéfinie, de sorte que l'une des entrées puisse être diminuée et que l'autre entrée puisse être augmentée de façon correspondante,
**caractérisé en ce que**
- le corps de soupape (58, 60) est réalisé en deux parties et comporte un anneau de soupape fixe (58) et une douille (60) mobile axialement par rapport à celui-ci,
- de l'eau froide et de l'eau chaude peuvent circuler longitudinalement sur l'anneau de soupape (58) de part et d'autre des entrées (22, 24), et
- la douille (60) comporte un renfoncement périphérique (70) qui s'étend entre deux flancs radiaux opposés (72, 74) dont la distance est essentiellement supérieure de la course de réglage à l'extension axiale de l'anneau de soupape (58), et
- la douille (60) comporte, à la partie interne de son renfoncement périphérique (70) des évidements (78) pour permettre l'introduction d'eau chaude et d'eau froide dans la douille (60) de façon à former de l'eau mélangée pouvant circuler le long du thermostat (42).

2. Mitigeur thermostaté conforme à la revendication 1,
**caractérisé en ce que**
le thermostat (42) est monté au moins partiellement à la partie interne de la douille (60).

3. Mitigeur thermostaté conforme à la revendication 1 ou 2,
**caractérisé en ce que**
la douille (60) comprend des traverses (76) à la partie interne de son renfoncement périphérique (70).

4. Mitigeur thermostaté conforme à l'une des revendications 1 à 3,
**caractérisé en ce que**
l'anneau de soupape (58) comporte des saillies d'écartement (80) s'étendant de part et d'autre en direction axiale et qui s'appuient contre les sièges de soupape (50, 52) du boîtier (12) formé sur les entrées d'eau chaude et d'eau froide (22, 24).

5. Mitigeur thermostaté conforme à l'une des revendications 1 à 4,
**caractérisé en ce que**
l'anneau formant siège de soupape (58) comporte un siège de soupape d'eau froide (62) et un siège de soupape d'eau chaude (64) qui sont en particulier décalés vers l'intérieur par rapport aux sièges de soupape d'eau chaude et d'eau froide (50, 52) du boîtier (12) et sont en particulier situés à l'opposé de ceux-ci.
